# EUROPÄISCHE PATENTANMELDUNG

(11) **EP 1 372 285 A2**
(43) Veröffentlichungstag der Anmeldung: **17.12.2003**
(21) Anmeldenummer: 03007253.2
(22) Anmeldetag: 31.03.2003
(51) Int. Cl.: H04H 1/00

(54) **Verfahren zur Aufzeichnung über Funk, insbesondere Rundfunk, empfangener Informationen, insbesondere Audiosignale**

(30) Priorität: 07.06.2002 DE 10225624
(71) Anmelder: ROBERT BOSCH GMBH, 70442 Stuttgart (DE)
(72) Erfinder: Schade-Buensow, Volker, 31134 Hildesheim (DE); Zimmer, Darren, 31171 Nordstemmen (DE)

(57) **Zusammenfassung**

Vorgeschlagen wird ein Verfahren zur Aufzeichnung über Funk, insbesondere Rundfunk, empfangener Informationen, insbesondere Audiosignale, wobei die empfangenen Informationen in einen ersten Speicher geschrieben werden, wobei die im ersten Speicher gespeicherten Informationen durch neu empfangene Informationen, vorzugsweise spätestens dann, wenn die Speicherkapazität des ersten Speichers durch die Summe der im ersten Speicher gespeicherten Informationen überschritten wird, überschrieben werden, welches sich dadurch auszeichnet, dass auf einen Aufzeichnungsbefehl die oder ein Teil der im ersten Speicher vorhandenen Informationen in einen zweiten Speicher übernommen werden.

Dadurch wird erreicht, dass auch dann, wenn die Wiedergabe einer den Benutzer interessierenden Information bereits begonnen hat, dieser dennoch die gesamte Informationseinheit, beispielsweise das ganze, bereits teilweise abgespielte Musikstück, von Anfang an vollständig aufzeichnen kann.

## Beschreibung

### Stand der Technik

Die Erfindung geht von einem Verfahren zur Aufzeichnung über Funk, insbesondere Rundfunk, empfangener Informationen, insbesondere Audiosignale nach der Gattung des unabhängigen Patentanspruchs aus.

Es sind Rundfunkempfänger in Form von Autoradios bekannt, die über eine Verkehrsfunk-Aufzeichnungsfunktion verfügen, bei denen über Rundfunk empfangene Audiosignale, hier in Form gesprochener Verkehrsmeldungen, in Reaktion auf eine die Verkehrsmeldungen begleitende, ebenfalls über Rundfunk ausgestrahlte Verkehrsmeldungskennung in einem Audiosignalspeicher des Geräts abgespeichert werden. Der Speicher des Geräts wird bei Überschreiten seiner Kapazität infolge neu empfangener Verkehrsmeldungen regelmäßig durch die neuesten Meldungen überschrieben. Die aktuell gespeicherten Verkehrsmeldungen können auf Wunsch durch den Benutzer abgerufen und akustisch wiedergegeben werden.

Insbesondere aus dem Bereich der Unterhaltungselektronik für den Heimbereich sind Aufzeichnungsgeräte bekannt, mit denen über Rundfunk, beispielsweise Hör- oder Fernsehrundfunk, ausgestrahlte (Audio-) Signale, aus dem laufenden Programm heraus aufgezeichnet werden können.

### Vorteile der Erfindung

Das erfindungsgemäße Verfahren mit den Merkmalen des unabhängigen Patentanspruchs hat demgegenüber den Vorteil, dass auch dann, wenn die Wiedergabe eines den Benutzer interessierenden Audiosignals oder die Übertragung einer Information bereits begonnen hat, dieser dennoch die gesamte Audiosignaleinheit oder Informationseinheit, beispielsweise das ganze, bereits teilweise abgespielte Musikstück, von Anfang an vollständig aufzeichnen kann.

Dazu ist erfindungsgemäß ein Pufferspeicher (nachfolgend auch erster Speicher) vorgesehen, in den regelmäßig alle empfangenen Informationen, insbesondere Audiosignale eingeschrieben werden, wobei bei Überschreitung der Aufzeichnungskapazität des Pufferspeichers dessen Inhalt durch neu empfangene Informationen beginnend mit den ältesten gespeicherten Signalen überschrieben wird. Die Speicherkapazität des Pufferspeichers ist vorteilhafter Weise derart bemessen, dass wenigstens ein Abschnitt eines empfangenen Informations- insbesondere Audio-, insbesondere Musik-, Signals aufgezeichnet werden kann, der lange genug ist, dem Benutzer eine Beurteilung dahingehend zu ermöglichen, ob die gerade empfangenen und wiedergegebenen Audiosignale für ihn von besonderem Interesse und daher speicherwürdig sind. Erfindungsgemäß wird auf einen Aufzeichnungsbefehl der Inhalt des Pufferspeichers in einen Speicher (nachfolgend zweiter Speicher) übernommen und damit für spätere Wiedergaben bevorratet.

Gemäß einer vorteilhaften Weiterbildung der Erfindung ist es vorgesehen, dass die über Funk empfangenen, sich an die aufgezeichneten Informationen, insbesondere Audiosignale anschließenden Informationssignale derselben Informationseinheit, insbesondere desselben Musikstückes, in den zweiten Speicher, vorzugsweise an dem ersten Informationsabschnitt folgenden Speicherplätzen, gespeichert werden. Somit liegt im zweiten Speicher eine vollständige Informationseinheit, insbesondere Audiosignaleinheit, insbesondere ein vollständiges Musikstück, für eine nachfolgende erneute Wiedergabe zum Abruf bereit.

In vorteilhafter Ausgestaltung eines Funkempfängers zur Durchführung des Verfahrens nutzt dieser zur kurzzeitigen Zwischenspeicherung des über Funk empfangenen Informationssignals, insbesondere Audiosignals einen Pufferspeicher, der in Verbindung mit einem in den Funkempfänger integrierten Abspielgerät für plattenförmige Aufzeichnungsträger (CD, DVD,...) zur Fehlerkorrektur benötigt wird. Ein solcher Pufferspeicher (shock proof memory) verfügt typischerweise über eine ausreichende Aufzeichnungskapazität zur erfindungsgemäßen Zwischenspeicherung des über Funk empfangenen Informations-, insbesondere Audiosignals. Darüber hinaus wird der Pufferspeicher in einem Funk-, insbesondere Rundfunk-Wiedergabemodus für die Plattenwiedergabe (CD, DVD,...) nicht benötigt und kann somit vorteilhafterweise für andere Zwecke mitgenutzt werden.

### Zeichnungen

Ausführungsbeispiele der Erfindung sind in den Figuren dargestellt und werden nachfolgend näher erläutert.

### Es zeigen

Figur 1 ein Blockschaltbild des erfindungswesentlichen Teils eines Autoradios als Beispiel für eine Anordnung zur Durchführung des erfindungsgemäßen Verfahrens,

Figur 2 schematisch den Vorgang der Aufzeichnung eines über Funk empfangenen Audiosignals,

Figur 3 eine detailliertere schematische Darstellung des Aufzeichnungsvorgangs eines über Funk empfangenen Audiosignals,

Figur 4 die Ansicht einer Frontkappe eines Autoradiogeräts zur Durchführung des erfindungsgemäßen Verfahrens und

Figur 5 eine detaillierte schematische Darstellung des Aufzeichnungsvorgangs eines über Funk empfangenen Audiosignals gemäß eines alternativen Ausführungsbeispiels der Erfindung.

### Beschreibung der Ausführungsbeispiele

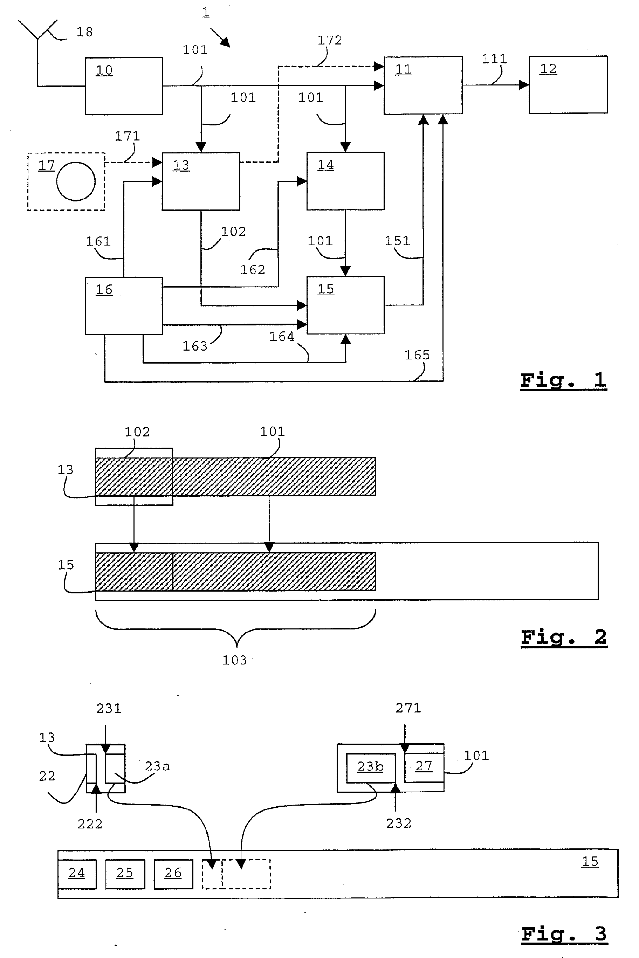

Figur 1 zeigt ein Blockschaltbild eines Funkempfängers 1 zur Durchführung des erfindungsgemäßen Verfahrens am Beispiel eines Autoradiogeräts, das zum Empfang von frequenzmodulierten Rundfunksignalen im UKW-Frequenzband ausgelegt ist. Der Modulationsgehalt dieser UKW-Rundfunksignale umfasst regelmäßig für eine akustische Wiedergabe vorgesehene Hörfunkprogrammsignale, also Audiosignale, darunter auch Musikstücke.

Einem Empfangsteil 10 des Autoradiogeräts ist ein an einer Empfangsantenne 18 anstehendes Gemisch aus am Empfängerstandort empfangbaren UKW-Empfangssignalen zugeführt. Das Empfangsteil 10 verfügt in an sich bekannter und daher hier nicht näher erläuterter Weise über die zur Selektion und Demodulation eines bestimmten der empfangbaren UKW-Empfangssignale. Am Ausgang des Empfangsteils 10 steht folglich der Modulationsgehalt 101 des selektierten und demodublierten UKW-Empfangssignals, also das eigentliche Hörfunkprogramm, an.

Das laufend empfangene Hörfunkprogramm 101 wird in einem nachfolgend beschriebenen Rundfunk-Wiedergabemodus in einem ersten Speicher (auch Pufferspeicher) 13 aufgezeichnet. Der erste Speicher 13 verfügt dabei vorzugsweise über eine begrenzte Speicherkapazität, so dass er einen Audiosignalabschnitt von beispielsweise 30 Sekunden Länge speichern kann. Der erste Speicher 13 ist darüber hinaus derart ausgelegt, dass im Falle, dass seine Speicherkapazität vollständig durch aufgezeichnete Audiosignale erschöpft ist, die zeitlich ältesten der aufgezeichneten Signale durch neu empfangene Audiosignale überschrieben werden. Im ersten Speicher 13 sind folglich zu jedem belieben Betrachtungszeitpunkt jeweils die in den letzten 30 Sekunden empfangenen Audiosignale gespeichert.

Gemäß einer besonders vorteilhaften Ausführungsform der Erfindung wird in einem Rundfunk-Wiedergabemodus, in dem das empfangene Hörfunkprogramm mittels an das Autoradio angeschlossenen Lautsprechern wiedergegeben wird, als erster Speicher 13 ein sogenanntes "shock proof memory" mitverwendet. Bei dem genannten "shock proof memory" handelt es sich um einen Pufferspeicher zur Zwischenspeicherung von einem plattenförmigen Audiosignalträger, beispielsweise Compact Disc (CD) oder Digital Versatile Disc (DVD) o. ä., gelesener Audiosignale. Ein solcher plattenförmiger Aufzeichnungsträger samt zugehörigem Lesegerät ist bei heutigen Autoradiogeräten verbreitet und in Figur 1 mit dem Bezugszeichen 17 versehen. Bekanntermaßen sind Plattenlesegeräte erschütterungsempfindlich, wobei infolge Erschütterungen der Lesegeräte Fehler beim Lesen der plattenförmigen Aufzeichnungsträger auftreten, die sich in hörbar fehlerhaften Audiosignalen auswirken. Daher wurde in einer älteren Patentanmeldung der Anmelderin vorgeschlagen, die ausgelesenen Audiosignale 171 mit einer höheren Geschwindigkeit auszulesen, als dies die Wiedergabe erfordert und den dabei entstehenden Datenüberschuss zwecks Fehlerkorrektur zwischenzuspeichern. Die Speicherkapazität des dafür eingesetzten "shock proof memory" liegt üblicherweise im Bereich einiger 10 Sekunden, z. B. 30 Sekunden.

Das laufend empfangene Hörfunkprogramm 101 wird in einem Rundfunk-Wiedergabemodus über einen Quellenwahlschalter 11 als Wiedergabesignal 111 über eine Wiedergabevorrichtung 12, wiedergegeben. Die Wiedergabevorrichtung 12 verfügt dazu in an sich bekannter und daher hier nicht näher ausgeführter Weise über die erforderlichen Mittel zur Lautstärkeeinstellung und Verstärkung, gegebenenfalls auch zur Klangbeeinflussung des Wiedergabesignals 111 sowie über daran angeschlossenen Lautsprecher zur Umsetzung des Wiedergabesignals 111 in ein Schallereignis. Der Quellenwahlschalter 11 wird durch eine Bedienelemente umfassende Bedieneinheit 16 des Autoradiogeräts mittels eines Quellenwahlsignals 165 zwischen verschiedenen Wiedergabemodi umgeschaltet. Im vorliegenden Fall ist beispielsweise eine Umschaltung zwischen CD- oder DVD-Wiedergabe (gegebenenfalls korrigiertes CD- oder DVD-Audiosignal 172), Rundfunk-Wiedergabemodus (Hörfunkprogrammsignal 101) oder Wiedergabe von in einem zweiten Speicher 15, beispielsweise einer Multi-Media-Card (MMC) aufgezeichneten Audiosignalen 151 vorgesehen. Je nach gewünschtem Wiedergabemodus leitet der Quellenwahlschalter 11 nach Maßgabe des Quellenwahlsignals 165 eines der genannten Audiosignale Rundfunk 101, MMC 151 oder CD 172 als Wiedergabesignal 111 zur Wiedergabe an den Eingang der Wiedergabevorrichtung 12.

Der beschriebene Funkempfänger verfügt außerdem über eine nachstehend näher erläuterte Mitschneidefunktion zum Aufzeichnen von über Funk empfangenen Audiosignalen auf einen weiteren Aufzeichnungsträger, beispielsweise eine MMC, der in der Figur durch den zweiten Speicher 15 repräsentiert wird.

Das empfangene Audiosignal (Hörfunkprogrammsignal) 101 ist zu diesem Zweck über einen Freigabeschalter 14 dem zweiten Speicher 15 zugeführt. Der Freigabeschalter 14 wird durch die Bedieneinheit 16 angesteuert, wobei nach Auslösen eines Aufzeichnungsbefehls durch den Benutzer über die Bedieneinheit 16 ein Freigabesignal 162 den Freigabeschalter 14 zur Weiterleitung des empfangenen Audiosignals 101 an den zweiten Speicher 15 durchschaltet. Weiterhin bewirkt ein durch den Aufzeichnungsbefehl ausgelöstes Kopiersignal 161, dass der Speicherinhalt 102 des ersten Speichers 13, also der in den ersten Speicher 13 geschriebene Abschnitt des Audiosignals 101, an den zweiten Speicher 15 ausgegeben wird. Schließlich bewirkt ein auf den Aufzeichnungsbefehl von der Bedieneinheit abgegebenes Übernahmesignal 163 an den zweiten Speicher 15, dass dieser zum einen den Inhalt 102 des ersten Speichers 13 übernimmt und des weiteren das aktuell empfangene Audiosignal 101 an dem übernommenen Inhalt des ersten Speichers folgenden Speicherplätzen im zweiten Speicher 15 aufzeichnet. Folglich wird in den zweiten Speicher 15 zunächst der Inhalt 102 des ersten Speichers 13 und in direkter zeitlicher Folge das laufend empfangene Audiosignal 101 eingeschrieben (Figur 2).

Eine detaillierte Darstellung des Aufzeichnungsvorgangs ist in Figur 3 am Beispiel der Aufzeichnung von Musikstücken aus einem laufend empfangenen Rundfunkprogramm angegeben. Im Fall der in Figur 3 zugrundegelegten Ausführungsform handelt es sich bei dem Rundfunkempfänger um einen solchen zum Empfang nach einem digitalen Standard ausgestrahlter Rundfunksignale, etwa "XM" oder "SIRIUS". Neben dem eigentlichen Hörfunkprogramm (Musik, Sprachbeiträge) werden Zusatzinformationen, darunter z. B. im Falle eines gerade übertragenen Musikstücks 23 der Name des Künstlers bzw. Interpreten, der Titel des Musikstücks 23 sowie Anfangs- und Endmarkierungen für das gerade ausgestrahlte Musikstück 23 übertragen.

In den ersten Speicher 13, also den beschriebenen Pufferspeicher, werden die aktuell empfangenen Audiosignale derart eingeschrieben, dass immer die ältesten im Speicher vorliegenden Audiosignale durch die gerade empfangenen Audio- bzw. Musiksignale überschrieben werden.

Zu einem in Figur 3 festgehaltenen Beobachtungszeitpunkt befinden sich im Speicher 13 gerade noch Audiosignale eines älteren Musikstückes 22, sowie dessen Endmarkierung 222, die ebenfalls aufgezeichnet worden ist. Im Anschluss daran sind im Speicher 13 weitere Audiodaten 23a des gerade empfangenen Musikstücks 23 sowie dessen Anfangsmarkierung 231 gespeichert. Die Audiodaten 23a repräsentieren den zum Beobachtungszeitpunkt bereits ausgestrahlten und mittels des Rundfunkempfängers 1 empfangenen Audiosignale 101 des aktuell empfangbaren Musikstücks 23.

Wird nun zu dem in Figur 3 dargestellten Zeitpunkt, beispielsweise durch Betätigung eines entsprechenden Bedienelements an der Bedieneinheit 16 durch den Benutzer, ein Aufnahmebefehl ausgelöst, wird der Inhalt des ersten Speichers 13, beginnend mit der Anfangsmarkierung 231 des aktuell empfangbaren Musikstückes 23, also der bereits empfangene und zwischengespeicherte Audiosignalabschnitt 23a des Musikstückes 23a an einen freien Speicherplatz in den zweiten Speicher 15 kopiert. Der erste freie Speicherplatz findet sich im Speicher 15 im Anschluss an dort bereits in gleicher Weise gespeicherte Musikstücke 24, 25 und 26. Der Aufnahmebefehl bewirkt weiterhin, dass der noch zu empfangende Abschnitt 23b des aktuell empfangenen Musikstücks 23 aus dem laufend empfangenen Hörfunkprogrammsignal 101 (=Audiosignal) direkt in den zweiten Speicher 15 eingeschrieben wird. Das Einschreiben des zweiten Abschnitts 23b des Musikstückes 23 erfolgt dabei im unmittelbaren Anschluss an den ersten, zunächst im ersten Speicher 13 zwischengespeicherten und darauf in den zweiten Speicher kopierten, Audiosignalabschnitt 23a des Musikstückes 23. Die Aufzeichnung des zweiten Audiosignalabschnitts 23b aus dem laufenden Programm wird bei Erkennen der neben dem Audiosignal empfangenen Endmarkierung 232 beendet. Ein darauf empfangenes weiteres Signal 27, das mit der Anfangsmarkierung 271 gekennzeichnet ist, wird dann in beschriebener Weise wieder in den ersten Speicher 13 eingeschrieben.

Wird mittels des empfangbaren Rundfunksignals keine Endmarkierung für Audiosignaleinheiten, sondern statt dessen lediglich eine Anfangsmarkierung, eine Gesamtlänge des Musikstücks und/oder Fortschrittsanzeige übertragen, kann das Ende der Aufzeichnung in den zweiten Speicher 15 aus dem laufenden Programm heraus anhand der Anfangsmarkierung und der Gesamtlänge des Musikstücks, oder alternativ oder ergänzend dazu anhand der Gesamtlaufzeit des Musikstücks und der Fortschrittsanzeige durch Abgleich mit einer geräteinternen Uhr bestimmt werden.

Werden keine eine direkte oder indirekte Bestimmung des Endes des Musikstückes anzeigenden Daten übertragen oder empfangen, kann dieses durch eine Signalpausenerkennung, beispielsweise durch Nullpegeldetektion, bestimmt werden und der Aufzeichnungsvorgang bei erkannter Signalpause beendet werden.

Der beschriebene Aufzeichnungsvorgang bewirkt, dass auch dann, wenn der Benutzer erst nach Wiedergabebeginn eines über Funk empfangenen Audiosignals, insbesondere z. B. Musikstückes, einen Aufzeichnungsbefehl an der Bedieneinheit 16 auslöst, im zweiten Speicher 15 dennoch die gesamte Audiosignaleinheit 103, insbesondere das gesamte Musikstück 23, einschließlich deren/dessen zeitlich vor dem Auslösebefehl liegenden Anfangs aufgezeichnet wird.

Dazu muss allerdings der Aufzeichnungsbefehl durch den Benutzer innerhalb der durch die Kapazität des ersten Speichers 13 vorgegebenen Aufzeichnungsdauer nach dem Beginn des über Funk empfangenen Audiosignals an der Bedieneinheit 16 gegeben werden. Eine Aufzeichnungskapazität des ersten Speichers 13 von ca. 30 Sekunden scheint hierfür hinreichend.

Gemäß einer Weiterbildung der Erfindung kann eine Sperrung der Aufzeichnung vorgesehen werden, für den Fall, dass der Aufzeichnungsbefehl nicht innerhalb der durch die Aufzeichnungskapazität des ersten Speichers 13 vorgegebenen Zeitdauer nach Beginn des Audiosignals gegeben wird. Demzufolge sind dann solche Audiosignaleinheiten im zweiten Speicher 15 nicht aufzeichenbar, deren Anfang aufgrund der begrenzten Kapazität des ersten Speichers 13 nicht mehr verfügbar sind.

Der Beginn einer Audiosignaleinheit, insbesondere eines Musikstückes, kann, wie beschrieben, beispielsweise durch eine Nullpegeldetektion erkannt werden, also durch Prüfung des empfangenen Audiosignals auf Abschnitte, in denen der Pegel des Signals für eine vorgegebene Zeitdauer unter einen bestimmten Wert absinkt. Geeignete Werte für den bestimmten Wert des Audiosignalpegels können vorzugsweise empirisch und in Abhängigkeit eines Grundrauschens oder eines Maßes an Empfangsstörungen ermittelt werden. Damit wird eine sichere Pausenerkennung auch bei schlecht oder verrauscht empfangenen Audiosignalen sichergestellt. Ebenso kann die vorgegebene Zeitdauer, ab der ein Nullpegel als Audiosignalpause erkannt wird, empirisch und beispielsweise in Abhängigkeit der Dynamik des empfangenen Audiosignals bestimmt werden.

Weiterhin kann auch vorgesehen sein, die beschriebene Nullpegeldetektion zur Anfangserkennung zur Beschränkung des auf den Aufzeichnungsbefehl in den zweiten Speicher 15 kopierten Signals aus dem ersten Speicher 13 zu verwenden. Damit kann verhindert werden, dass zeitlich vor dem Beginn der Audiosignaleinheit (Musikstück) liegende Signalanteile, die im ersten Speicher 13 noch nicht überschrieben sind, als vermeintlich zum Beginn der aktuellen Audiosignaleinheit gehörende Signalbestandteile in den zweiten Speicher 15 kopiert werden.

Im Falle beispielsweise eines Empfängers für digitale Rundfunksignale ist es möglich, über Rundfunk auch Anfangsund/oder Endmarkierungen für Audiosignaleinheiten mit zu übertragen. Diese können dann in vorteilhafter Weise anstelle der beschriebenen Nullpegeldetektion zur Anfangserkennung einer aufgezeichneten bzw. aufzuzeichnenden Audiosignaleinheit 103 ausgewertet werden. Beispielsweise wird, wie erwähnt, bei dem in USA betriebenen Satelliten-Rundfunksystem "XM" neben einem Musiksignal periodisch der Name des Künstlers und des Musikstücks sowie Länge und (zeitlicher) Fortschritt des aktuell gesendeten Musikstücks und weiterhin Länge und Startzeit des nächstfolgenden Musikstücks mit übertragen. Ähnlich verhält es sich auch bei dem ebenfalls in USA betriebenen Satelliten-Rundfunksystem "SIRIUS". Die mit übertragenen Zeitdaten können in Verbindung mit einer im Empfänger 1 vorgesehenen Uhr zur Erkennung des Beginns eines Musikstücks bzw. einer Audiosignaleinheit verwendet werden.

Das im zweiten Speicher 15 gespeicherte Audiosignal ist mittels eines entsprechenden Auswahlbefehls über die Bedieneinheit 16 anstelle einer laufenden Rundfunkwiedergabe oder eines CD- oder DVD-Signals über die Quellenwahlschalter 11 und die Wiedergabeeinheit 12 wiedergebbar. Dazu erzeugt die Bedieneinheit 16 einen entsprechenden Auswahlsteuerbefehl 164 zur Steuerung des zweiten Speichers 15 zur Abgabe des gespeicherten Audiosignals und einen entsprechenden Quellenwahlbefehl 165 zur Umschaltung des Quellenswahlschalters 11 auf den Ausgang des zweiten Speichers 15.

Der zweite Speicher 15 kann vorteilhafterweise beispielsweise als Karten- Schreib- und Lesegerät für Speicher-Chipkarten, insbesondere z. B. für MMC (multi media card) mit darin eingelegtem Speichermedium (MMC) ausgeführt sein.

Insbesondere ist eine Ausgestaltung des zweiten Speichers 15 von Vorteil, bei dem die eigentlichen Speichermedien, wie im Falle der MMC, austauschbar sind. Eine alternative Ausführungsform des zweiten Speichers 15 könnte beispielsweise in einem Schreib- und Lesegerät für an sich bekannte MiniDisc ™ (MD) bestehen, in das die Mini Disc als austauschbares Speichermedium einsetzbar ist. Alternativ könnte der zweite Speicher 15 beispielsweise in Form einer aus dem Gerät entnehmbaren Festplatte oder einer Minifestplatte, z. B. Microdrive ™ ausgeführt sein.

Wenngleich sich das beschriebene Ausführungsbeispiel im wesentlichen auf ein Autoradio zum Empfang im UKW-Frequenzband ausgestrahlter FM-modulierter Rundfunksignale mit integriertem CD- oder DVD-Abspielgerät richtet, bedeutet dies keinerlei Beschränkung des Erfindungsgegenstandes. Vielmehr ist die Erfindung ohne weiteres ersichtlich prinzipiell auf jedweden Funkempfänger, sei es beispielsweise auf Rundfunkempfänger für digitalen Rundfunk, etwa DAB (digital audio broadcasting), Satellitenrundfunk o. ä., anwendbar. Im Falle codiert, insbesondere in komprimierter Form, etwa nach dem MPEG-2-, MPEG-3- oder einem anderen Standard, gesendeter Audiosignale können diese in vorteilhafter Weise auch in komprimierter Form in den ersten und den zweiten Speicher 13, 15 geschrieben werden. Dies ermöglicht eine verbesserte Speicherausnutzung und demzufolge eine höhere Speicherkapazität, im Falle des ersten Speichers 13 insbesondere eine längere Reaktionszeit für den Benutzer zur Eingabe des Aufzeichnungsbefehls nach dem Beginn der Wiedergabe des gerade empfangenen Audiosignals. In diesem Fall ist dann die Decodierung vorteilhafterweise in der Wiedergabeeinheit 12 integriert, der die in codierter Form vorliegenden Audiosignale zwecks Wiedergabe zugeführt sind.

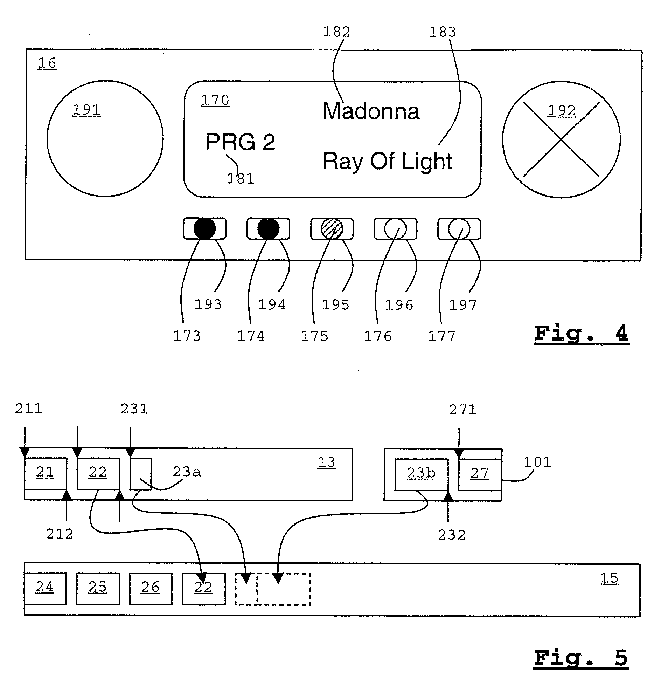

Ein weiteres Ausführungsbeispiel der Erfindung wird nachstehend anhand der Figuren 4 und 5 erläutert.

Zugrunde liegt auch hier der Funk- bzw. Rundfunkempfänger, wie er vorstehend insbesondere unter Bezugnahme auf Figur 1, aber auch die weiteren Figuren 2 und 3 beschrieben wurde. Ein wesentlicher Unterschied dieses Ausführungsbeispiels zu dem vorgenannten Rundfunkempfänger besteht in der Aufzeichnungskapazität des ersten Speichers 13, die im vorliegenden Fall vorzugsweise derart bemessen ist, dass in dem ersten Speicher 13 mehrere, beispielsweise fünf, Musikstücke durchschnittlicher Länge (z. B. 3,5 Minuten) abspeicherbar sind. Der erste Speicher 13 kann dabei als separater Speicherbaustein, etwa Flash-Speicher, ausgeführt sein, ebenso ist es aber auch möglich, im zweiten Speicher 15 einen Speicherabschnitt zur Realisierung des ersten Speichers 13 und zur Zwischenspeicherung der zuletzt empfangenen Audiosignale vorzuhalten. Wie beim zuvor beschriebenen Ausführungsbeispiel wird auch der aktuelle Inhalt des ersten Speichers 13, in dem die zuletzt über Funk empfangenen Audiosignale abgebildet sind, bei Überschreiten seiner Kapazitätsgrenze durch aktuell empfangbare Audiosignale überschrieben, so dass zu einem beliebigen Beobachtungszeitpunkt stets die unmittelbar vor diesem Zeitpunkt empfangenen Audiosignale 21, 22, 23a im ersten Speicher 13 vorliegen (Figur 5). Gemäß Figur 5 sind zusammen mit den zwischengespeicherten Audiosignalen 21, 22, 23a auch die zugehörigen Anfangs- und Endmarkierungen 211, 231 und 212, sofern schon empfangen, abgespeichert.

Figur 4 zeigt die im in ein Kraftfahrzeug eingebauten Zustand für den Benutzer zugängliche Frontkappe eines erfindungsgemäßen Autoradiogeräts 1, die gleichzeitig dessen Bedieneinheit 16 darstellt. Diese umfasst eine Anzeigeeinheit 170, auf der verschiedene Informationen, wie der Name 181 eines aktuell empfangenen Rundfunkprogramms, der Name 183 eines aktuell empfangenen Musikstücks 23 und der Name 182 des Künstlers bzw. Interpreten des aktuell empfangenen Musikstücks angezeigt werden oder anzeigbar sind. Die Frontkappe des Autoradiogeräts 1 umfasst weiterhin Bedienelemente, wie einen drehbaren Inkrementengeber 191 zur Verstellung eines ausgewählten Parameters, etwas der Wiedergabelautstärke, oder zur Auswahl eines aus einer Mehrzahl am Empfängerstandort empfangbarer Rundfunkprogramme, und eine Kreuzwipptaste 192 zum Manövrieren in einem auf dem Display 170 darstellbaren zweidimensionalem Auswahlmenu oder zur Auswahl eines mittels des Inkrementengebers 191 zu verstellenden Parameters.

Des weiteren umfasst die Frontkappe sogenannte Stationstasten 193, 194, 195, 196 und 197, unter denen bei herkömmlichen Autoradiogeräte in der Regel Rundfunkprogrammdaten zum wahlweisen Aufruf eines bestimmten Rundfunkprogramms abgespeichert sind. Diese Stationstasten 193 bis 197 dienen im Zusammenhang mit vorliegender Erfindung der Auswahl eines im ersten Speichers 13 zwischengespeicherten Musikstücks 21, 22, 23 und zur Eingabe eines Aufnahmebefehls zur Aufzeichnung bzw. Übernahme des betroffenen Musikstücks 21, 22 oder 23 aus dem ersten Speicher 13 in den zweiten Speicher 15. Dabei ist es vorgesehen, dass jede der einzelnen Stationstasten 193 bis 197 einem im ersten Speicher 13 zwischengespeicherten Musikstück 21, 22, 23 bzw. Audiosignaleinheit zugeordnet ist. Weiter ist es vorgesehen, dass im ersten Speicher 13 zu jedem Zeitpunkt eine Höchstzahl von Musikstücken bevorratet wird, die der Zahl der an der Frontkappe 16 des Autoradios 1 vorhandenen Stationstasten 193 bis 197 entspricht, so dass jedem zwischengespeicherten Musikstück eindeutig eine Stationstaste zuordenbar ist.

Im Falle der Figuren 4 und 5 sind im ersten Speicher 13 zum dort festgehaltenen Beobachtungszeitpunkt bereits zwei Musikstücke 21 und 22 mit ihren Anfangs- und Endmarkierungen 211 und 212 vollständig aufgezeichnet. Diese sind den ersten beiden Stationstasten 193 und 194 zugeordnet. Des weiteren befindet sich im ersten Speicher bereits ein erster Abschnitt 23a eines dritten Musikstücks 23 zusammen mit seiner Anfangsmarkierung 231. Das dritte Musikstück 23 ist der dritten Stationstaste 195 zugeordnet.

Gemäß einer besonders vorteilhaften Ausführungsform dieses Ausführungsbeispiels der Erfindung sind die Stationstasten 193, 194, 195, 196, 197 individuell durch individuell zugeordnete Lichtquellen 173, 174, 175, 176 und 177 beleuchtbar. Dabei zeigt der aktuelle Beleuchtungszustand einer jeden Stationstaste 193 bis 197 den zugeordneten Speicherinhalt des ersten Speichers 13 an. Im Falle der Figuren 4 und 5 liegen im ersten Speicher 13 zwei Musikstücke 21 und 22 vollständig vor. Die diesen beiden Musikstücke zugeordneten Stationstasten 193 und 194 sind durch ihre zugeordneten Leuchtquellen 173 und 174, beispielsweise rot, beleuchtet. Weiterhin liegt im ersten Speicher 13 ein erster Abschnitt 23a eines dritten Musikstücks 23 vor, das aktuell in den ersten Speicher 123 eingeschrieben wird. Die dem dritten Musikstück 23 zugeordnete Stationstaste 195 ist durch die zugeordnete Lichtquelle 175, beispielsweise rot blinkend, beleuchtet. Die abweichende, hier blinkende, Beleuchtung der dritten Stationstaste 195 zeigt an, dass gerade das dritte Musikstück 23 in den ersten Speicher eingeschrieben wird. Die weiteren Stationstasten 196 und 197 sind unbeleuchtet, da im ersten Speicher 13 keine zugeordneten Musikstücke vorliegen.

Durch Betätigen einer der beleuchteten Stationstasten, im Fall der Figuren 4 und 5 193 oder 194 und den damit ausgelösten Auswahl- und Aufnahmebefehl wird das zugeordnete Musikstück 21 oder 22 aus dem ersten Speicher 13 an den nächsten freien Speicherplatz im zweiten Speicher 15 kopiert. Bei der in Figur 5 dargestellten Situation sind im zweiten Speicher 15 bereits Musikstücke 24, 25 und 26 abgespeichert. Auf eine Betätigung der zweiten Stationstaste 196 wird das zweite im ersten Speicher 13 vorliegende Musikstück 22 an die dem Musikstück 26 folgende freie Speicheradresse im zweiten Speicher kopiert.

Wird hingegen die dritte, blinkende Stationstaste 195 betätigt, folgt der zuvor in Verbindung mit den Figuren 1 bis 3 beschriebene Aufzeichnungsvorgang, es wird also der erste Teil 23a des dritten Musikstücks 23, der bereits im ersten Speicher vorliegt, in den zweiten Speicher kopiert, während der noch nicht aufgezeichneten zweite Abschnitt 23b des dritten Musikstücks 23 aus dem laufend empfangenen Rundfunkprogramm 101 an dem ersten Abschnitt 23a unmittelbar folgender Adresse direkt in den zweiten Speicher 15 eingeschrieben wird.

Das Ende des Mitschnitts des dritten Musikstücks 23 kann vorteilhafterweise, wie bereits angedeutet, durch die empfangene Endmarkierung 232 ausgelöst werden. Weitere im Rundfunksignal enthaltene Musikstücke 27 (mit Anfangsmarkierung 271) werden dann wieder in beschriebener Weise in den ersten Speicher 13 eingeschrieben.

Vorstehende Ausführungsbeispiele wurden vorwiegend anhand von Audiosignalen/Musikstücken beschrieben. Dies ist jedoch nicht im Sinne einer Beschränkung auf Audiosignale zu verstehen, vielmehr können in analoger Weise auch jedwede andere Art von Informationen aufgezeichnet werden. Beispielhaft sei hier auf Videoinformationen oder Informationen von Datendiensten, wie z. B. in codierter Form ausgestrahlte Verkehrsmeldungen hingewiesen.

## Patentansprüche

1. Verfahren zur Aufzeichnung über Funk, insbesondere Rundfunk, empfangener Informationen, insbesondere Audiosignale,
wobei die empfangenen Informationen (101) in einen ersten Speicher (13) geschrieben werden,
wobei die im ersten Speicher (13) gespeicherten Informationen (102) durch neu empfangene Informationen, vorzugsweise spätestens dann, wenn die Speicherkapazität des ersten Speichers (13) durch die Summe der im ersten Speicher gespeicherten Informationen (102) überschritten wird, überschrieben werden,
**dadurch gekennzeichnet,**
**dass** auf einen Aufzeichnungsbefehl die oder ein Teil der im ersten Speicher (13) vorhandenen Informationen in einen zweiten Speicher (15) übernommen werden.

2. Verfahren nach Anspruch 1, **dadurch gekennzeichnet, dass** die über Funk empfangenen, sich an die aufgezeichneten Informationen (102) anschließenden Informationen (101) derselben Informationseinheit, insbesondere desselben Musikstückes, in den zweiten Speicher (15), vorzugsweise an dem ersten Informationsabschnitt (102) folgenden Speicherplätzen, gespeichert werden.

3. Verfahren nach einem der Ansprüche 1 oder 2, **dadurch gekennzeichnet, dass** als erster Speicher (13) ein Pufferspeicher einer, vorzugsweise in den Funkempfänger integrierten, Wiedergabeeinrichtung (17) für plattenförmige Aufzeichnungsträger, wie z. B. CD oder DVD, genutzt wird.
